# FASCICULE DE BREVET EUROPEEN

(11) **EP 1 538 557 B1**
(45) Date de publication et mention de la délivrance du brevet: **13.02.2013**
(21) Numéro de dépôt: 04106254.8
(22) Date de dépôt: 02.12.2004
(51) Int. Cl.: G06K 19/07

(54) **Modulation résistive et capacitive dans un transpondeur électromagnétique**
Widerstands- und Kapazitätsmodulation in einem elektromagnetischen Transponder
Resistive and capacitive modulation in an electromagnetic transponder

(30) Priorité: 05.12.2003 FR 0350990
(43) Date de publication de la demande: 08.06.2005
(73) Titulaire: STMicroelectronics S.A., 92120 Montrouge (FR)
(72) Inventeur: ENGUENT, Jean-Pierre, 13119, SAINT SAVOURNIN (FR)
(74) Mandataire: de Beaumont, Michel

(56) Documents cités:
- EP-A- 1 022 677
- WO-A-00/70552

## Description

La présente invention concerne les systèmes de transmission de données à transpondeurs électromagnétiques et, plus particulièrement, la transmission de données d'un transpondeur électromagnétique sans contact et sans fil vers une borne de lecture-écriture.

Les transpondeurs électromagnétiques auxquels s'applique plus particulièrement l'invention sont des émetteurs-récepteurs dépourvus d'alimentation autonome, qui extraient l'énergie requise par les circuits électroniques qu'ils comportent d'un champ haute fréquence rayonné par l'antenne de la borne de lecture-écriture. De tels transpondeurs électromagnétiques sont basés sur l'utilisation de circuits oscillants côté transpondeur et côté borne de lecture-écriture. Ces circuits sont couplés par champ magnétique proche lorsque le transpondeur entre dans le champ de la borne de lecture-écriture.

Le circuit oscillant de la borne est excité par un signal haute fréquence (par exemple, 13,56 MHz) pour être capté par un transpondeur. Quand le transpondeur se trouve dans le champ de la borne, une tension haute fréquence est engendrée aux bornes du circuit résonnant du transpondeur. Cette tension, après redressement, fournit la tension d'alimentation des circuits électroniques du transpondeur qui comprennent généralement un microprocesseur, une mémoire, un démodulateur de signaux éventuellement reçus de la borne et un modulateur pour transmettre des informations à la borne. Ces circuits électroniques peuvent également être des circuits en logique câblée.

La transmission d'informations du transpondeur vers la borne s'effectue généralement en modifiant la charge du circuit oscillant de ce transpondeur, de sorte que ce dernier prélève une quantité d'énergie plus ou moins grande du champ magnétique haute fréquence. Cette variation est détectée côté borne dans la mesure où l'amplitude du signal d'excitation haute fréquence est maintenue constante. Par conséquent, une variation d'énergie prélevée par le transpondeur se traduit par une variation d'amplitude et de phase du courant dans l'antenne de la borne. Cette variation est alors détectée au moyen d'un démodulateur de phase et/ou d'un démodulateur d'amplitude.

La variation de charge côté transpondeur est généralement effectuée au moyen d'un interrupteur électronique de commande d'une résistance ou d'un condensateur modifiant la charge du circuit oscillant. L'interrupteur électronique est généralement commandé à une fréquence (par exemple, 847,5 kilohertz) dite sous-porteuse de rétromodulation, nettement inférieure (généralement avec un rapport d'au moins 10) à la fréquence du signal d'excitation du circuit oscillant de la borne de lecture-écriture.

Le brevet américain n° 6 356 198 décrit un système de modulation capacitive d'un transpondeur électromagnétique. On y prévoit, entre le circuit résonnant du transpondeur et ses moyens de redressement, un circuit de modulation capacitive destiné à modifier la charge du transpondeur sur le champ rayonné par la borne.

Un problème récurrent des systèmes à transpondeurs est que différents facteurs influent sur la transmission. Non seulement la distance qui sépare le transpondeur de la borne est susceptible de modifier l'amplitude et la phase d'un signal reçu par la borne mais également des perturbations électromagnétiques de l'environnement du système influent sur cette transmission. On cherche généralement à minimiser les effets de cet environnement en maintenant l'accord des circuits oscillants de la borne et du transpondeur sur la même fréquence (13,56 MHz). Pour cela, on modifie généralement l'accord du circuit résonnant du transpondeur en modifiant (par exemple, au moyen de capacités commutables) la valeur équivalente du condensateur en parallèle sur l'antenne de ce circuit résonnant. Une telle adaptation de l'accord est décrite, par exemple, dans le brevet américain, n° 5 892 300. Il ne s'agit pas d'une modulation au rythme de la sous-porteuse pour transmettre des informations mais simplement d'une modification de l'accord du circuit résonnant. Une telle adaptation de l'accord permet notamment de maximiser l'énergie reçue par le transpondeur télé-alimenté par la borne. Cela ne règle toutefois pas le problème de la démodulation, par la borne, d'informations transmises par le transpondeur.

Une autre difficulté réside dans le fait que ni le transpondeur ni la borne ne sait, avant la transmission, si des données transmises seront correctement reçues.

La présente invention vise à proposer une nouvelle solution aux problèmes de qualité des signaux reçus par une borne de lecture-écriture de transpondeurs électromagnétiques.

L'invention vise plus particulièrement à proposer une solution qui s'adapte à des variations dynamiques (à chaque communication) de la qualité d'une transmission entre au moins un transpondeur et une borne.

L'invention vise à proposer une solution compatible avec l'exploitation des données transmises par un démodulateur d'amplitude et/ou de phase côté borne de lecture-écriture.

L'invention vise en outre à proposer une solution compatible avec les types de modulation et de codage couramment utilisés par les transpondeurs. En particulier, l'invention vise à proposer une solution conforme à la norme ISO 14443.

La présente invention prévoit un procédé de sélection d'au moins un élément de rétromodulation d'un transpondeur électromagnétique selon la revendication 1 et un transpondeur selon la revendication 5.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique et sous forme de blocs, un mode de réalisation d'un transpondeur électromagnétique selon la présente invention ;
la figure 2 représente un premier mode de réalisation d'un circuit de rétromodulation équipant un transpondeur selon la présente invention ;
la figure 3 représente un deuxième mode de réalisation d'un circuit de rétromodulation d'un transpondeur selon la présente invention ;
la figure 4 représente, de façon très schématique et simplifiée, un système de communication entre une borne et un transpondeur selon l'invention ;
la figure 5 illustre la structure d'un exemple de trame d'interrogation par une borne à destination de transpondeurs susceptibles d'être présents dans son champ ;
la figure 6 illustre la structure d'un mot de la trame de la figure 5 ; et
la figure 7 illustre la structure d'un exemple de trame de réponse d'un transpondeur selon un mode de mise en oeuvre de l'invention.

Les mêmes éléments ont été désignés par les mêmes références aux différentes figures. Pour des raisons de clarté, seuls les éléments et étapes de procédé qui sont nécessaires à la compréhension de l'invention ont été représentés aux figures et seront décrits par la suite. En particulier, les circuits de codage des données à transmettre et les circuits de démodulation n'ont pas été détaillés et ne font pas l'objet de l'invention, celle-ci pouvant être mise en oeuvre avec des structures classiques de borne de lecture-écriture.

Une caractéristique de la présente invention est de prévoir, côté transpondeur, une rétromodulation capacitive et/ou résistive.

Une autre caractéristique de l'invention est d'adapter le type de rétromodulation aux conditions de fonctionnement du système en temps réel. Pour cela, l'invention tire profit de la structure des échanges entre une borne et un transpondeur selon lesquelles une borne émet périodiquement une trame d'interrogation jusqu'à ce qu'un transpondeur réponde. Ainsi, l'invention prévoit de façon préférentielle d'utiliser cette trame pour envoyer aux transpondeurs éventuellement dans le champ, des bits de configuration de leurs circuits de rétromodulation.

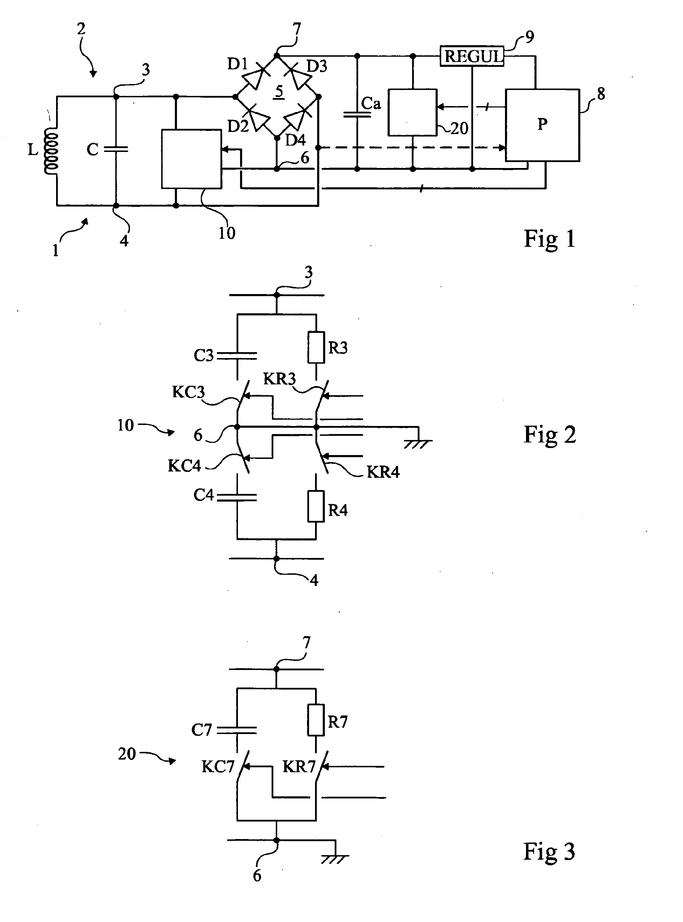

La figure 1 représente un transpondeur selon un mode de réalisation de la présente invention. Le transpondeur 1 comporte un circuit résonnant 2 généralement parallèle constitué d'une inductance L en parallèle avec un condensateur C pour capturer le champ généré par un circuit oscillant d'une borne (non représentée). Le circuit résonant L-C du transpondeur est de préférence accordé sur la fréquence du circuit oscillant de la borne, par exemple en étant ajusté au moyen d'un système tel que décrit dans le brevet US n° 5 892 300 susmentionné.

Les bornes 3 et 4 du circuit résonnant 2 (correspondant aux bornes du condensateur C) sont connectées à deux entrées alternatives d'un pont de redressement 5 formées, par exemple, de quatre diodes D1, D2, D3 et D4. En variante, l'élément de redressement pourra être un élément de redressement monoalternance. Les anodes des diodes D2 et D4 forment une borne 6 de référence de la tension redressée qui définit la masse des circuits du transpondeur. Les cathodes des diodes D1 et D3 définissent une borne 7 de sortie redressée positive, les bornes 3 et 4 étant respectivement reliées à l'anode de la diode D1 (cathode de la diode D2) et à l'anode de la diode D3 (cathode de la diode D4). Un condensateur Ca est connecté en parallèle sur les bornes 6 et 7 redressées du pont 5 pour filtrer la tension redressée fournie par celui-ci.

Quand le transpondeur entre dans le champ d'une borne de lecture-écriture, une tension haute fréquence est générée aux bornes du circuit résonnant 2. Cette tension, redressée par le pont 5 et filtrée par le condensateur Ca, fournit une tension d'alimentation au circuit électronique 8 (P) du transpondeur par l'intermédiaire d'un régulateur de tension 9 (REGUL). Les circuits électroniques 8 du transpondeur ont été symbolisés par un bloc. Ce bloc est généralement une puce (le plus souvent intégrant le régulateur 19) contenant au moins une mémoire et un processeur.

Pour permettre la transmission de données depuis le transpondeur 1 vers une borne de lecture-écriture, le bloc 8 commande au moins un étage 10 ou 20 de rétromodulation du circuit résonnant 2.

Des exemples préférés de circuit de rétromodulation seront décrits par la suite en relation avec les figures 2 et 3. Pour l'instant, on notera simplement que chaque étage 10, 20 de rétromodulation comporte au moins un commutateur électronique, au moins un condensateur et au moins une résistance de façon à modifier la charge du circuit oscillant 2 et permettre la détection correspondante côté borne.

La figure 2 représente un premier mode de réalisation d'un étage dit de rétromodulation selon l'invention. Un tel étage comporte, en parallèle entre les bornes 3 et 6, au moins un condensateur C3 et une résistance R3 commutables. Le condensateur C3 et la résistance R3 sont rendus commutables en étant par exemple connectés en série chacun avec un interrupteur KC3, KR3 commandable individuellement par le processeur du circuit 8. Par exemple, les interrupteurs KC3 et KR3 sont constitués de transistors MOS.

Selon le mode de réalisation de la figure 2, l'étage 10 comprend une structure similaire entre les bornes 4 et 6. Ainsi, un condensateur C4 et une résistance R4 chacun en série avec un interrupteur KC4, respectivement KR4, sont connectés en parallèle entre les bornes 4 et 6.

Les différents éléments de modulation sont commandables individuellement de façon à optimiser la réception de données par la borne.

Selon les cas, on peut avoir intérêt à effectuer une modulation uniquement capacitive, uniquement résistive ou mixte. De plus, en cas de modulation mixte, on pourra utiliser la résistance R3 en même temps que la résistance C4 ou la résistance C3 en même résistance R4 plutôt que les résistances et condensateurs en parallèle.

La figure 3 représente un deuxième mode de réalisation d'un étage 20 de rétromodulation selon l'invention. Cet étage est destiné à être situé entre l'élément de redressement et les circuits électroniques plutôt qu'entre l'élément de redressement et le circuit résonnant comme c'est le cas de l'étage 10 décrit précédemment. Dans ce cas, on prévoit une association en parallèle d'un condensateur C7 et d'une résistance R7 entre les bornes 7 et 6. Le condensateur C7 et la résistance R7 sont rendus commandables individuellement au moyen d'un interrupteur KC7, respectivement KR7, recevant des signaux de commande du processeur des circuits 8.

L'étage de rétromodulation 20 peut être utilisé à la place ou en même temps que l'étage de rétromodulation 10.

Selon l'invention, au cours d'une même transmission transpondeur vers borne, les mêmes commutateurs de modulation sont commutés au rythme de la sous porteuse de transmission. Toutefois, la configuration choisie pour les positions ON ou OFF des commutateurs est susceptible d'être modifiée d'une communication à une autre.

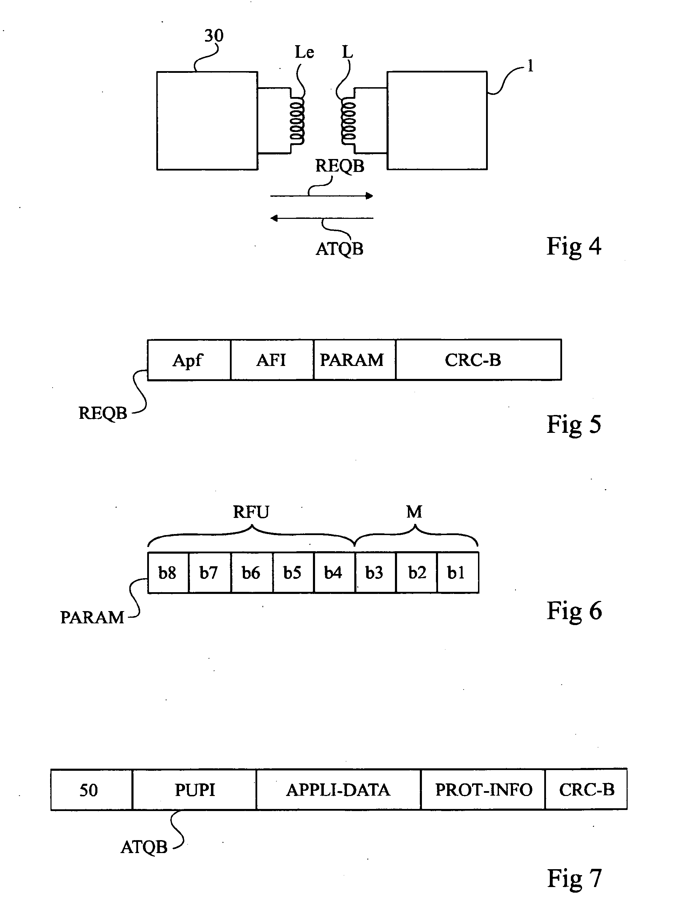

La figure 4 illustre, de façon très schématique, une borne 30 de lecture-écriture et son antenne Le, et un transpondeur 1 selon l'invention et son antenne L.

De façon classique, une borne 30 surveille la présence d'un transpondeur 1 dans le champ rayonné par son antenne Le en envoyant périodiquement une trame REQB susceptible d'être captée par un transpondeur lorsqu'il est présent dans le champ. Dès qu'un transpondeur capte et décode une trame REQB transmise par une borne, il répond par un accusé réception ATQB. Cette réponse s'effectue en commutant la charge ajoutée sur le circuit oscillant au rythme de la sous-porteuse de rétromodulation.

Selon un mode de réalisation préféré de l'invention, cette commutation n'est effectuée que pour les interrupteurs des circuits de rétromodulation qui correspondent à la configuration choisie. En variante, on pourra prévoir, pour chaque élément, deux interrupteurs en série. Un premier interrupteur sert alors d'interrupteur de sélection ou de configuration et reçoit un signal suite au décodage de la trame REQB ou équivalent. Un deuxième interrupteur sert d'interrupteur de modulation et est commandé, avec tous les interrupteurs du même type, par le signal de rétromodulation. Toutefois, le mode de réalisation préféré a l'avantage de simplifier la commande et de consommer moins.

D'après la norme ISO 14443, les trames REQB et ATQB ont des formats particuliers. On notera toutefois que l'invention n'est pas limitée à ces trames et peut être mise en oeuvre dès qu'une borne envoie périodiquement des messages d'interrogation à destination de transpondeurs éventuellement présents dans son champ et qu'un transpondeur, dès qu'il est présent, répond par un message particulier. De plus, l'invention est compatible avec des systèmes ou une même borne peut communiquer avec plusieurs transpondeurs.

La figure 5 illustre la structure d'une trame REQB d'après la norme ISO 14443 prise pour exemple. Cette trame comporte d'abord un octet APf (AntiCollision Prefix Byte) constituant un préfixe d'anticollision. L'octet APf est suivi d'un octet AFI (Application Family Identifier) qui représente le type d'application(s) visée(s) par la borne et qui est utilisé pour présélectionner le type de transpondeurs susceptibles de répondre à une trame REQB donnée. L'octet AFI est suivi d'un octet PARAM de paramétrage d'anticollision, lui-même suivi de deux octets CRC-B contenant un calcul fait sur les octets précédents, permettant de détecter les erreurs de communication.

Dans cet exemple, la présente invention utilise de préférence des bits de l'octet PARAM pour transmettre un ordre de configuration des circuits de rétromodulation de n'importe quel transpondeur présent dans le champ de la borne.

En effet, comme l'illustre la figure 6 qui représente la structure d'un octet PARAM selon la norme 14443, les trois premiers bits B1, B2, B3 sont utilisés pour fixer un paramètre M d'anticollision alors que les cinq autres bits B4, B5, B6, B7 et B8 sont libres (SRFU).

Ainsi, l'invention prévoit d'utiliser ces cinq bits pour transmettre un code à un transpondeur du type de celui de la figure 1 afin de lui fixer le type de rétromodulation souhaité. Cinq bits disponibles représentent 32 combinaisons possibles, ce qui est largement suffisant. Ces combinaisons peuvent, par exemple, être les différentes combinaisons possibles des signaux de commande des différents interrupteurs KC et KR des figures 1 et 2. Selon une variante de réalisation, plus d'un condensateur et d'une résistance sont prévus en parallèle dans les circuits de rétromodulation, ce qui accroît le nombre de configurations possibles.

On notera qu'il importe peu que tous les transpondeurs aient la même constitution en terme de circuit de rétromodulation. Ce qui importe c'est que, pour un transpondeur capable d'effectuer des rétromodulations différentes, on prévoit qu'il interprète les bits B4 à B8 du mot PARAM comme des consignes différentes du type de modulation à effectuer. Ainsi, n'importe quel lecteur effectuant des envois de combinaison, par exemple séquentiels, des états des bits B4 à B8, tombera forcément sur la combinaison optimale en exploitant les réponses du transpondeur. De plus, il importe peu qu'un transpondeur ne soit pas capable d'interpréter toutes les combinaisons des bits B1 à B8, en particulier s'il ne dispose pas du même nombre de combinaisons possibles dans ses circuits de rétromodulation. Ce qui importe c'est qu'en fonction du nombre de ses propres combinaisons possibles, il conditionne chaque combinaison de ses interrupteurs à l'apparition d'une combinaison des bits de configuration B4 à B8.

Lorsqu'un transpondeur décode une trame REQB, il y répond par une trame ATQB. Une trame ATQB selon la norme 14443 comprend 14 octets. Un premier octet contient une valeur fixe (par exemple, le nombre 50). Les trois octets suivants contiennent un identifiant PUPI (Pseudo Unique Picc Identifier) du transpondeur. Les quatre octets suivants (APPLI-DATA) identifient le type d'application(s) contenue(s) dans le transpondeur. Les trois octets suivant (PROT-INFO) contiennent des informations sur le protocole de communication, et les deux derniers octets CRC-B contiennent le calcul de CRC.

Cette réponse est, selon l'invention, effectuée en utilisant un type de rétromodulation particulier fonction de la combinaison fixée par les bits B4 à B8 du mot PARAM. Lorsque le lecteur reçoit le message ATQB et le décode, il est en mesure de déterminer si le niveau qu'il reçoit est ou non suffisant.

Selon un premier mode de mise en oeuvre, on utilise un seuil côté borne pour déterminer si un niveau de réception est ou non satisfaisant. Dans ce cas, les différentes combinaisons des bits de configuration B4 à B8 sont envoyées successivement dans des trames REQB et, dès qu'une trame ATQB est reçue avec un niveau suffisant, on passe à la suite de la communication, sans transmettre les autres trames REQB. Les circuits de rétromodulation du transpondeur restent dans cette configuration jusqu'à l'apparition d'une nouvelle trame REQB.

Selon un autre mode de mise en oeuvre préféré, la trame REQB est envoyée en boucle en utilisant toutes les possibilités (32 dans le cas du message RFU) et en mémorisant le niveau reçu par les trames respectives de réponse ATQB. Une fois la meilleure combinaison déterminée par la borne, celle-ci réutilise le mot PARAM une dernière fois pour fixer au transpondeur le type de rétromodulation souhaité.

Côté transpondeur, celui-ci garde la configuration fixée par une trame REQB jusqu'à la prochaine trame REQB, c'est-à-dire jusqu'à la transmission suivante.

Un tel balayage de différentes possibilités est parfaitement compatible avec les débits de transmission. En effet, la durée habituelle d'une requête REQB est de l'ordre de 380 microsecondes et la durée habituelle d'une réponse ATQB est de l'ordre de la milliseconde, ce qui est négligeable par rapport à la vitesse de déplacement d'un transpondeur devant la borne qui est de plusieurs centaines de millisecondes (vitesse de déplacement d'une main). La durée habituelle d'une transmission entre une borne et un transpondeur avant de redémarrer des requêtes REQB est généralement de l'ordre de plusieurs dizaines de millisecondes, ce qui est là encore parfaitement compatible avec la durée requise pour fixer, par la mise en oeuvre de l'invention, le type de rétromodulation.

Un avantage de la présente invention est qu'elle permet d'optimiser le niveau de réception par la borne quelles que soient les éventuelles perturbations présentes.

Un autre avantage de l'invention est qu'elle permet une adaptation dynamique, c'est-à-dire à chaque échange entre un transpondeur et une borne.

Un autre avantage de l'invention est qu'elle ne nécessite aucune modification de la structure des bornes classiques. Il suffit, pour la norme 14443, de prévoir des bits B4 à B8 particuliers dans la trame REQB émise en boucle par la borne. Par la suite, l'exploitation du niveau reçu par le démodulateur est généralement présente dans une borne classique et l'exploitation des résultats est compatible avec une utilisation logicielle qui ne nécessite aucune modification structurelle de la borne.

Un autre avantage de l'invention est qu'elle est compatible avec des transpondeurs ayant des circuits de rétromodulation paramétrables différents. En effet, l'objectif étant de sélectionner le meilleur des circuits de rétromodulation disponible par un transpondeur donné, il importe peu que ces circuits de rétromodulation soient meilleurs qu'un transpondeur voisin.

L'invention permet également d'optimiser la communication dans le cas où le transpondeur est posé sur la borne. Dans ce cas, les durées requises pour le choix de la configuration sont encore plus négligeables.

Bien entendu, la présente invention est susceptible de diverses variantes et modifications qui apparaîtront à l'homme de l'art. En particulier, bien que l'invention ait été décrite en relation avec un mode de mise en oeuvre préféré adapté à la norme ISO 14443, on pourra prévoir de modifier une trame d'émission en boucle par une borne pour s'adapter à d'autres systèmes de transmission. De plus, la mise en oeuvre pratique de l'invention par des moyens matériels et/ou logiciels est à la portée de l'homme du métier à partir des indications fonctionnelles données ci-dessus.

## Revendications

1. Procédé de sélection d'au moins un élément de rétromodulation d'un transpondeur électromagnétique comprenant :
un circuit oscillant (2) ;
un circuit électronique (8) incluant un circuit de transmission pour transmettre des informations codées numériquement ; et
au moins un premier circuit (10) de modulation résistive et capacitive paramétrable comprenant au moins un élément résistif (R3,R4,R7) et au moins un élément capacitif (C3,C4,C7) de la charge d'un circuit oscillant (2), couplé au circuit oscillant,
**caractérisé en ce qu'**il comporte une étape de sélection d'au moins un desdits éléments de modulation en fonction d'un message binaire reçu d'une borne de lecture-écriture.

2. Procédé selon la revendication 1, dans lequel ledit message binaire est transmis sur une requête (REQB) effectuée en boucle par la borne de lecture-écriture.

3. Procédé selon la revendication 2, dans lequel un transpondeur recevant ladite requête répond (ATQB) en utilisant des éléments de modulation sélectionnés d'après ledit message binaire reçu de la borne.

4. Procédé selon la revendication 3, dans lequel la borne mémorise une pluralité de réponses effectuées avec des éléments de modulation différents et envoie une dernière requête de transmission avec un message binaire de configuration correspondant à la réponse reçue avec la meilleure qualité.

5. Transpondeur adapté à la mise en oeuvre du procédé selon l'une quelconque des revendications 1 à 4.

6. Transpondeur selon la revendication 5, dans lequel un circuit (5) de redressement est couplé au circuit oscillant (2) pour fournir une tension d'alimentation continue au circuit électronique (8), ledit premier circuit de modulation (10) étant placé entre le circuit oscillant et ledit circuit de redressement.

7. Transpondeur selon la revendication 6, dans lequel un deuxième circuit de modulation (20) résistive et capacitive paramétrable est connecté entre l'élément de redressement (5) et le circuit électronique (8).

8. Transpondeur selon l'une quelconque des revendications 5 à 7, dans lequel chaque circuit de modulation (10, 20) comporte au moins un élément de modulation résistif ou capacitif, chaque élément étant commandable individuellement.

9. Transpondeur selon la revendication 8, dans lequel chaque circuit de modulation comporte au moins un condensateur (C3, C4 ; C7) et une résistance (R3, R4 ; R7) en parallèle.

10. Transpondeur selon la revendication 8 ou 9, dans lequel chaque élément de modulation est commandable par un signal de modulation transmis par le circuit électronique (8).

## Claims

1. A method for selecting at least one back-modulation element of an electromagnetic transponder comprising:
an oscillating circuit (2);
an electronic circuit (8) comprising a transmit circuit for transmitting digitally-coded information; and
at least one first parameterizable resistive and capacitive modulation circuit (10) comprising at least one resistive element (R3, R4, R7) and at least one capacitive element (C3, C4, C7) of the load of an oscillating circuit (2), coupled to the oscillating circuit,
**characterized in that** it comprises a step of selecting at least one of said modulation element according to a binary message received from read/write terminal.

2. The method of claim 1, wherein said binary message is transmitted on a loop request (REQB) by the read/write terminal.

3. The method of claim 2, wherein a transponder receiving said request responds (ATQB) by using modulation elements selected according to said binary message received from the terminal.

4. The method of claim 3, wherein the terminal stores a plurality of responses performed with different modulation elements and sends a last transmit request with a binary configuration message corresponding to the response received with the best quality.

5. A transponder adapted for the implementation of the method of any of claims 1 to 4.

6. The transponder of claim 5, wherein a rectifying circuit (5) is coupled to the oscillating circuit (2) to provide a D.C. supply voltage to the electronic circuit (8), said first modulation circuit (10) being placed between the oscillating circuit and said rectifying circuit.

7. The transponder of claim 6, wherein a second parameterizable resistive and capacitive modulation circuit (20) is connected between the rectifying element (5) and the electronic circuit (8).

8. The transponder of any of claims 5 to 7, wherein each modulation circuit (10, 20) comprises at least one resistive or capacitive modulation element, each element being individually controllable.

9. The transponder of claim 8, wherein each modulation circuit comprises at least one capacitor (C3, C4; C7) and one resistor (R3, R4; R7) in parallel.

10. The transponder of claim 8 or 9, wherein each modulation element is controllable by a modulation signal transmitted by the electronic circuit (8).

## Patentansprüche

1. Verfahren zum Auswählen von zumindest einem Rückmodulationselement eines elektromagnetischen Transponders, das Folgendes aufweist:
eine oszillierende Schaltung (2);
eine elektronische Schaltung (8), die eine Übertragungsschaltung aufweist,
um digital codierte Information zu übertragen; und
zumindest eine parametrierbare, resistive und kapazitive Modulationsschaltung (10), die zumindest ein resistives Element (R3, R4, R7) und zumindest ein kapazitives Element (C3, C4, C7) der Last einer oszillierenden Schaltung (2) aufweist, die mit der oszillierenden Schaltung gekoppelt ist,
**dadurch gekennzeichnet, dass** es einen Schritt des Auswählens von zumindest einem Modulationselement aufweist, und zwar gemäß einer binären Nachricht, die von einem Schreib-/Lese-Anschluss empfangen wird.

2. Verfahren gemäß Anspruch 1, wobei die binäre Nachricht auf einer Schlaufenabfrage (REQB) durch den Lese-/Schreibanschluss übertragen wird.

3. Verfahren gemäß Anspruch 2, wobei ein Transponder die Abfrageantworten (ATQB) durch Verwenden von Modulationselementen empfängt, die gemäß der binären Nachricht ausgewählt werden, die von dem Anschluss empfangen wird.

4. Verfahren gemäß Anspruch 3, wobei der Anschluss eine Vielzahl von Antworten speichert, die mit unterschiedlichen Modulationselementen ausgeführt werden, und zuletzt eine Übertragungsanfrage mit einer binären Konfigurationsnachricht entsprechend der Antwort sendet, die mit der besten Qualität empfangen wurde.

5. Transponder, der für die Implementierung des Verfahrens gemäß einem der Ansprüche 1 bis 4 angepasst ist.

6. Transponder gemäß Anspruch 5, wobei eine Demodulationsschaltung (5) mit der oszillierenden Schaltung (2) gekoppelt ist, um eine Gleichstromspannung an die elektronische Schaltung (8) zu liefern, wobei die erste Modulationsschaltung (10) zwischen der oszillierenden Schaltung und der Demodulationsschaltung angeordnet wird.

7. Transponder gemäß Anspruch 6, wobei eine zweite parametrierbare, resistive und kapazitive Schaltung (20) zwischen dem Demodulationselement (5) und der elektronischen Schaltung (8) eingebunden wird.

8. Transponder gemäß irgendeinem der Ansprüche 5 bis 7, wobei jede Modulationsschaltung (10, 20) zumindest ein resistives oder kapazitives Modulationselement aufweist, wobei jedes Element individuell steuerbar ist.

9. Transponder gemäß Anspruch 8, wobei jede Modulationsschaltung zumindest einen Kondensator (C3, C4, C7) und einen Widerstand (R3, R4, R7) in Parallelschaltung aufweist.

10. Transponder gemäß Anspruch 8 oder 9, wobei jedes Modulationselement durch ein Modulationssignal steuerbar ist, das durch die elektronische Schaltung (8) übertragen wird.
